# FASCICULE DE BREVET EUROPEEN

(11) **EP 2 128 414 B1**
(45) Date de publication et mention de la délivrance du brevet: **18.03.2015**
(21) Numéro de dépôt: 09159466.3
(22) Date de dépôt: 05.05.2009
(51) Int. Cl.: F02D 41/06, F02D 41/12, F02M 25/07, F02D 21/08

(54) **Procédé de contrôle moteur**
Motorkontrollverfahren
Engine control method

(30) Priorité: 26.05.2008 FR 0853395
(43) Date de publication de la demande: 02.12.2009
(73) Titulaire: PEUGEOT CITROËN AUTOMOBILES S.A., 78140 Velizy Villacoublay (FR)
(72) Inventeur: Hoffmann, Nicolas, 78180, Montigny le Bretonneux (FR); Portalier, Jacques, 92100, Boulogne-Billancourt (FR); Martinot, Stéphane, 92700, Colombes (FR)
(74) Mandataire: Ménès, Catherine

(56) Documents cités:
- EP-A- 0 904 971
- EP-A- 1 826 382
- WO-A-2007/004471
- DE-A1- 19 906 892
- US-A1- 2004 154 585

## Description

L'invention concerne un procédé et un dispositif d'accélération de la montée en température du liquide de refroidissement d'un moteur à combustion d'un véhicule automobile ainsi qu'un support d'enregistrement pour la mise en oeuvre de ce procédé.

Un moteur thermique tel un moteur d'un véhicule automobile est refroidi au moyen d'un liquide de refroidissement, tel que de l'eau éventuellement additionnée de glycol. Ce liquide circule dans un circuit passant par un radiateur refroidi par de l'air, typiquement en face avant du véhicule.

En régime stable, ce radiateur permet de réguler la température du liquide de refroidissement, à une valeur par exemple voisine de 70°C, adaptée au bon fonctionnement du moteur sur une longue durée (par convention, la température moteur est définie comme égale à la température du liquide de refroidissement moteur).

Au démarrage à froid du moteur, si le véhicule est resté en stationnement pendant une durée de par exemple quelques heures, le liquide de refroidissement est toutefois à une température proche de la température ambiante. Dans la suite de ce mémoire, on considérera qu'il y a démarrage à froid du moteur lorsque la température du liquide de refroidissement du moteur est égale à la température ambiante à plus ou moins 10° C près. Une fois le moteur démarré, la température du liquide de refroidissement augmente progressivement pour atteindre la valeur cible d'équilibre. De façon générale, il est souhaitable que cette montée en température du liquide de refroidissement soit la plus rapide possible, ne serait-ce que pour permettre le chauffage de l'habitacle.

Or différents phénomènes viennent ralentir cette montée en température. Par exemple, lors d'une décélération du moteur, on interrompt normalement l'injection de carburant, de sorte que l'air frais admis dans une chambre de combustion est directement transféré à l'échappement. La chambre de combustion n'étant plus chauffée par la réaction de combustion, le moteur peut être plus froid que le liquide de refroidissement qui paradoxalement est alors refroidi par le moteur.

II est connu des stratégies d'injection de carburant permettant de minimiser ce phénomène mais au prix d'une surconsommation de carburant. Il a aussi été proposé. C'est pourquoi l'invention vise à procurer d'autres moyens pour accélérer la montée en température du moteur lors des démarrages à froid.

Selon l'invention, ce but est atteint en limitant l'admission d'air frais dans les cylindres dans lesquels on interrompt l'injection de carburant, tout en maintenant le remplissage gazeux de ces cylindres par recirculation vers l'admission de gaz d'échappement.

Ce procédé est mis en oeuvre tant que le moteur est considéré comme froid, c'est-à-dire tant que le liquide de refroidissement n'a pas atteint une température seuil, fixée par exemple à 60°C, température qui peut éventuellement être choisie légèrement inférieure à la température cible de fonctionnement du moteur.

Ce type de stratégie est connu du document US 2004/0154585 A1 indépendamment de la température de moteur pour éviter le refroidissement d'un catalyseur.

L'invention s'applique en particulier aux moteurs à allumage par compression, dits moteurs diesel, équipés d'un circuit de recirculation des gaz d'échappement (circuit dit EGR, acronyme de l'expression anglo-saxonne Exhaust Gas Recirculation), et ce circuit étant au moins muni d'une vanne dite EGR pour contrôler la quantité de gaz d'échappement réintroduits à l'admission du moteur. Par ailleurs, les conduits d'admission de ces moteurs sont munis d'une vanne dite vanne papillon permettant notamment de bloquer l'admission d'air frais lors d'un arrêt moteur et d'éviter les phénomènes de toussotement, vanne papillon qui dans le cadre de l'invention va bien sûr être utilisée pour bloquer l'admission d'air frais. Ainsi le procédé selon l'invention peut être mis en oeuvre simplement par modification des lois de contrôle moteur.

L'invention peut également être appliquée aux moteurs à allumage commandé, dits essence, à la condition qu'ils soient équipés d'un circuit EGR.

Dans tous les cas, le remplissage des cylindres étant maintenu, on évite les phénomènes de pompage, surtout sensibles lorsque le moteur est équipé d'un turbocompresseur. De plus, comme l'interruption de l'admission d'air frais est effectuée sur les cylindres dans lesquels on a interrompu l'injection de carburant, le procédé selon l'invention n'entraine aucune surconsommation de carburant. Par ailleurs, comme l'invention évite la production de « gaz d'échappement » froids, lors de ces phases de décélération avec un moteur froid, on évite également le refroidissement des organes de dépollution, tels des catalyseurs. Or ces organes de dépollution ne sont normalement pas entièrement efficaces pendant les phases de démarrages à froid, pendant lesquels leur température est inférieure à leur température de bon fonctionnement, et qu'il importe donc de chauffer le plus rapidement possible pour limiter la pollution au démarrage du véhicule. Enfin, certains véhicules sont munis de moyens dits RTE pour récupérer en partie la chaleur des gaz d'échappement et ainsi contribuer à un réchauffage plus rapide du moteur et/ou de l'habitacle. II va de soi qu'en limitant la baisse de température des gaz d'échappement qui, pendant les phases de mise en oeuvre de la stratégie selon l'invention, circulent en boucle, on accroit par ailleurs l'efficacité de ces moyens.

Dans le procédé ci-dessus, l'admission d'air frais plus froid que le liquide de refroidissement est empêchée lorsque le véhicule automobile décélère. On évite donc ainsi que cet air frais refroidisse le moteur et donc le liquide de refroidissement. La baisse de température du liquide de refroidissement pendant les décélérations du véhicule automobile est donc limitée ce qui, en fin de compte, accélère la montée en température de ce liquide. En effet, en limitant la baisse de température du liquide de refroidissement pendant les décélérations, on permet au liquide de refroidissement d'atteindre plus rapidement la valeur cible pour sa température.

La stratégie selon l'invention est mise en oeuvre de préférence sur plusieurs cycles moteur, c'est-à-dire sur plusieurs aller-retour complet d'un piston dans un cylindre du moteur.

Dans une variante de l'invention, sa mise en oeuvre n'est par ailleurs autorisée que si le régime moteur et le couple moteur sont estimés ou mesuré inférieurs à des seuils respectifs prédéterminés.

Ces mesures visent à éviter la mise en oeuvre de l'invention en dehors des situations où elle est effectivement souhaitable.

L'invention sera mieux comprise à la lecture de la description qui va suivre, donnée uniquement à titre d'exemple non limitatif et faite en se référant aux dessins sur lesquels :

la figure 1 est une illustration schématique de l'architecture d'un véhicule automobile équipé d'un dispositif d'accélération de la montée en température du liquide de refroidissement d'un moteur de ce véhicule,

la figure 2 est une illustration d'une cartographie délimitant une zone dans laquelle les baisses de température du liquide de refroidissement doivent être limitées.

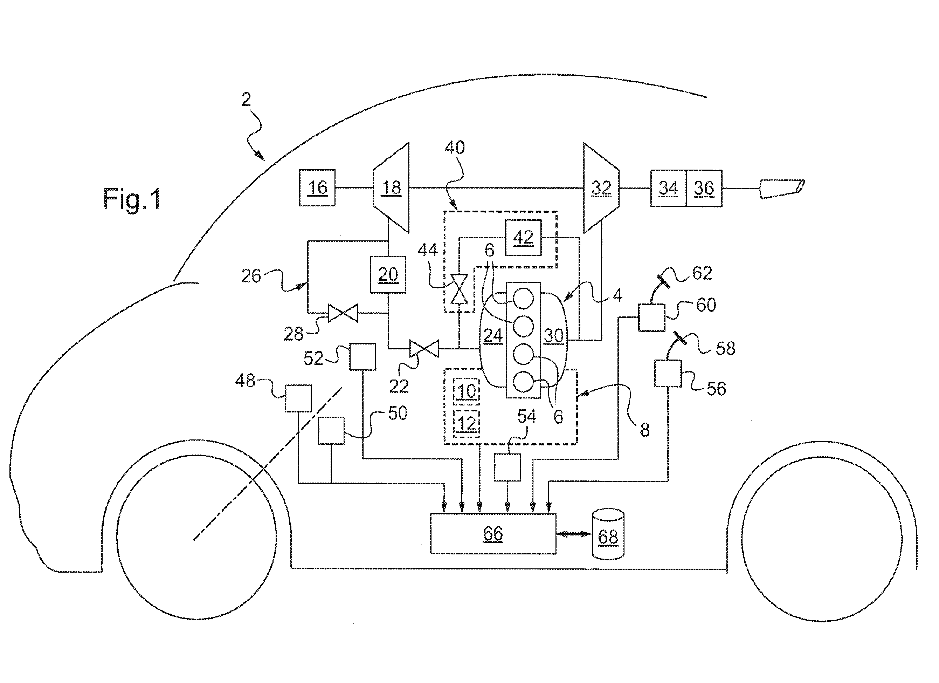

La figure 1 représente un véhicule automobile 2 équipé d'un moteur thermique à combustion 4. Le véhicule 2 est par exemple une voiture et le moteur 4 est par exemple un moteur diesel. Le moteur 4 comprend des cylindres 6 à l'intérieur desquels sont montés en translation des pistons.

En régime stable, l'élévation en température du moteur 4 est limitée par un circuit de refroidissement 8.

Le circuit 8 comprend un liquide de refroidissement qui circule entre, d'un côté, un radiateur 10 et de l'autre côté le moteur 4. Au niveau du moteur 4, le liquide de refroidissement capte l'énergie dissipée par ce moteur sous forme de chaleur. Ensuite, le liquide transporte cette énergie thermique jusqu'au radiateur 10 où elle est dissipée vers l'extérieur du véhicule.

Le circuit 8 comprend également un régulateur 12 propre à réguler les différents organes du circuit 8 de manière à maintenir la température du liquide de refroidissement égale à une valeur cible. Typiquement, la valeur cible de la température du liquide de refroidissement est atteinte après que le véhicule 2 ait parcouru plus d'une dizaine de kilomètres. Par exemple, cette valeur cible pourra être choisie voisine de 90°C.

Le circuit d'admission en air frais comporte de façon classique, un filtre à air 16 propre à filtrer l'air en provenance de l'extérieur du véhicule, un compresseur 18 propre à comprimer l'air frais avant de l'injecter dans les cylindres, un radiateur 20 de gaz de suralimentation, ce radiateur 20 permettant de refroidir l'air comprimé par le compresseur 18, et un boitier ou vanne papillon 22, propre à autoriser et, en alternance, à arrêter l'admission d'air frais dans un collecteur 24 d'admission distribuant l'air frais dans chacun des cylindres 6.

Le véhicule 2 comprend également un circuit 26, muni d'une vanne 28, pour éventuellement autoriser un court-circuit de l'air frais sans passage par le radiateur 20.

L'air frais admis dans les cylindres 6 sert de comburant. Plus précisément, l'air frais admis dans les cylindres 6 est mélangé à un carburant pour constituer un mélange explosif. Les gaz d'échappement sont collectés par un collecteur 30 d'échappement avant d'être envoyé vers un détendeur 32. Le détendeur 32 ramène les gaz d'échappement à la pression atmosphérique. Typiquement, la turbine du détendeur 32 entraîne en rotation la turbine du compresseur 18.

Les gaz d'échappement traversent ensuite, successivement un catalyseur 34 et un filtre 36 à particules avant d'être évacués à l'extérieur du véhicule.

Le catalyseur 34 est par exemple un catalyseur d'oxydation diesel également connu sous l'acronyme DOC (Diesel Oxidation Catalyst). Ce catalyseur 34 permet de réduire ou d'éliminer les monoxydes de carbone (CO) et les hydrocarbures non brûlés (HC) par une réaction exothermique transformant les hydrocarbones non consommés par le moteur.

Le filtre 36 retient quant à lui les particules présentes dans les gaz d'échappement. Les particules retenues dans le filtre 36 sont essentiellement des particules de carbone. Classiquement, ce filtre 36 doit être régénéré à intervalles réguliers en chauffant les gaz d'échappement à plus de 500 ou 600 °C.

Le véhicule 2 est également équipé d'un système 40 de recirculation des gaz d'échappement également connus sous l'acronyme d'EGR (Exhaust Gas Recirculation). Le système 40 est fluidiquement raccordé à la sortie du collecteur 30 et à l'entrée du collecteur 24 de manière à pouvoir ramener au moins une partie des gaz d'échappement collectés dans le collecteur 30 vers le collecteur 24.

Par exemple, ici le système 40 comprend à cet effet un radiateur 42 propre à refroidir les gaz d'échappement collectés au niveau du collecteur 30 et une vanne commandable 44 propre à autoriser et, en alternance, à arrêter l'admission des gaz d'échappement dans le collecteur 24. La vanne 44 est connue sous le terme de « vanne EGR ».

Le véhicule 2 peut comprendre également différents capteurs comme par exemple, un capteur 48 du couple Cm produit par le moteur 4 sur son arbre, un capteur 50 du régime Rm du moteur, un capteur 52 de la température de l'air frais admis au niveau du collecteur 24, un capteur 54 de la température du liquide de refroidissement, un capteur 56 de la position d'une pédale 58 d'accélération, et un capteur 60 de la position d'une pédale 62 de débrayage.

L'ensemble de ces capteurs est relié à un calculateur électronique 66. Ce calculateur 66 est également relié au circuit 8 pour acquérir la valeur cible de la température utilisée par le régulateur 12 et notamment les vannes 22 et 44. Pour simplifier la figure 1, les connexions entre le calculateur 66 et ces différents organes n'ont pas été représentées.

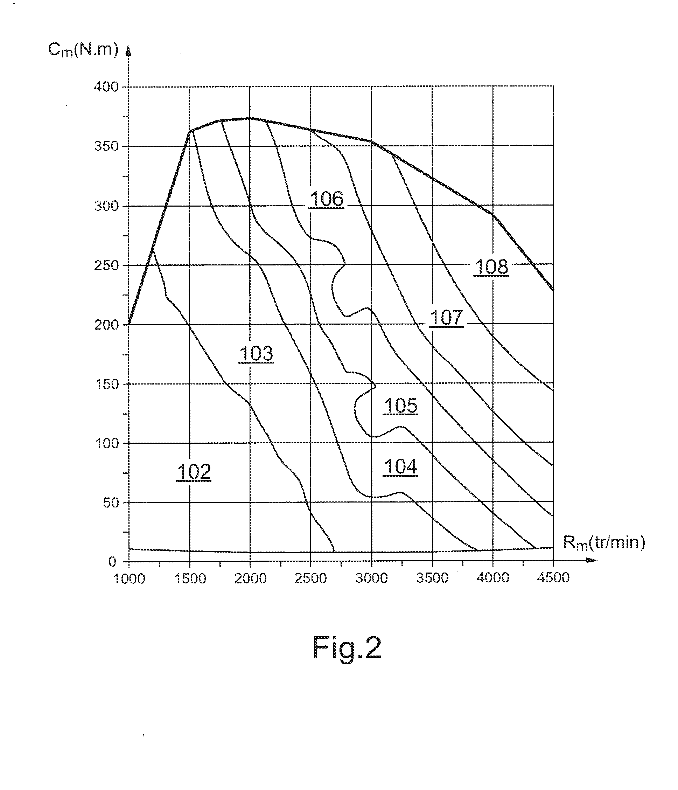

Par exemple, le calculateur 66 est un calculateur électronique programmable apte à exécuter des instructions enregistrées sur un support d'enregistrement d'informations. A cet effet, le calculateur 66 est raccordé à une mémoire 68. La mémoire 68 contient les instructions et les données nécessaires à l'exécution du procédé de la figure 2.

La réunion des capteurs 48, 50, 52, 54 et 56, des vannes 22 et 44 et du calculateur 66 et de sa mémoire 68 forme un dispositif d'accélération de la montée en température du liquide de refroidissement.

Lorsque la température du liquide de refroidissement est égale à la valeur cible, ou du moins supérieure à une température seuil qui peut être choisie inférieure à la température cible (pour fixer les idées, une température seuil de par exemple 60°C pour un moteur dont la température cible est de 90°C), le calculateur 66 exécute, lors d'une étape 80, des stratégies conventionnelles de commande des vannes 22 et 44 en fonction des différentes informations mesurées par les différents capteurs du véhicule 2.

Si maintenant le moteur est considéré comme froid, c'est-à-dire si le liquide de refroidissement est à une température inférieure à la température seuil, le calculateur va commander la mise en oeuvre de la stratégie selon l'invention à chaque fois qu'une demande de décélération est reconnue, c'est-à-dire typiquement lors d'une levée de pied sur la pédale d'accélérateur, la stratégie selon l'invention sera mise en oeuvre, c'est-à-dire que la vanne EGR est ouverte et le boitier papillon fermé.

De préférence, la mise en oeuvre de la stratégie selon l'invention n'est de plus autorisée que e couple du moteur Cm est inférieur à un seuil prédéterminé S2 et le régime du moteur mesuré Rm est inférieur à un seuil S3.

Les valeurs des seuils S2 et S3 sont fonction du régime mesuré Rm et du couple mesuré Cm. Plus précisément, la cartographie de la figure 2 représente différentes zones en fonction du régime Rm et du couple Cm du moteur. Ces zones sont numérotées de 102 à 108. Chaque zone correspond à une zone de fonctionnement du moteur 4 dans laquelle la pression de l'air frais est sensiblement constante.

Ici, les seuils S2 et S3 sont définis pour que la stratégie selon l'invention soit autorisée dès que le moteur se trouve dans la zone 107 de fonctionnement, c'est-à-dire dans la zone où le régime et le couple du moteur sont les plus faibles.

La cartographie de la figure 2 est par exemple construite expérimentalement pour chaque type de véhicule.

Un ou plusieurs des capteurs décrits ici peuvent être remplacés par des estimateurs propres à estimer la valeur d'une grandeur physique à partir de mesure d'autres grandeurs physiques et en mettant en oeuvre un modèle mathématique du comportement du moteur.

De préférence, la stratégie selon l'invention n'est mise en oeuvre que sur certaines plages de fonctionnement régime-charge. En effet, lorsque l'on atteint des charges trop élevées, et des pressions de suralimentation trop fortes, le fait de fermer le boîtier papillon pendant les décélérations entraîne du pompage compresseur par diminution trop rapide du débit entrant dans le compresseur. II est donc avantageux de limiter la mise en oeuvre de la stratégie à une zone régime-charge ne présentant pas de risques.

La stratégie selon l'invention peut également être mise ne oeuvre pendant les changements de rapport de boite de vitesse. En effet, pendant un changement de vitesse, on interrompt l'injection de carburant pendant un certain temps. Il faut néanmoins veiller à ne pas dégrader le brio du véhicule, ce qui peut être réalisé en couplant l'invention avec une stratégie de reconnaissance du mode de conduite, permettant d'anticiper la faisabilité ou non d'utiliser la stratégie pendant les changements de rapport.

## Revendications

1. Procédé de contrôle moteur, selon lequel lors des phases de démarrage à froid, en cas de décélération, on applique une stratégie visant à accélérer la montée en température du moteur, et consistant dans l'arrêt de l'injection en carburant et de l'admission en air frais dans au moins un cylindre, tout en maintenant le remplissage de ce au moins un cylindre par réinjection à l'admission de gaz d'échappement, ladite stratégie étant mise en oeuvre tant que la température du moteur est inférieure à une température seuil, inférieure ou égale à une température cible de fonctionnement du moteur.

2. Procédé selon la revendication 1, **caractérisé en ce que** la stratégie est mise en oeuvre sur plusieurs cycles moteur.

3. Procédé selon l'une quelconque des revendications précédentes, **caractérisé en ce que** la stratégie n'est mise en oeuvre que si le régime moteur et le couple moteur sont estimés ou mesuré inférieurs à des seuils respectifs prédéterminés.

4. Procédé selon l'une quelconque des revendications précédentes, **caractérisé en ce que** la stratégie est mise en oeuvre pendant un changement de rapport de boite de vitesse.

5. Procédé de contrôle d'un moteur muni d'un circuit de recirculation des gaz d'échappement, ledit circuit comportant au moins une branche munie d'un échangeur pour refroidir les gaz d'échappement recirculés et d'au moins un bypass pour court-circuiter ladite branche traversant ledit échangeur échangeur, **caractérisée en ce que** l'on interdit la circulation des gaz d'échappement dans la branche de l'échangeur pendant les phases de mises en oeuvre d'une stratégie visant à accélérer la montée en température du moteur, et consistant dans l'arrêt de l'injection en carburant et de l'admission en air frais dans au moins un cylindre, tout en maintenant le remplissage de ce au moins un cylindre par réinjection à l'admission de gaz d'échappement.

## Patentansprüche

1. Verfahren zur Motorkontrolle, wobei man während Kaltstartphasen bei Verlangsamung eine Strategie anwendet, die darauf abzielt, den Temperaturanstieg des Motors zu beschleunigen, und die im Anhalten der Kraftstoffeinspritzung und des Frischlufteinlasses in wenigstens einem Zylinder besteht, wobei gleichzeitig die Füllung von diesem wenigstens einen Zylinder durch Wiedereinspritzung in den Abgaseinlass aufrechterhalten wird, wobei die Strategie umgesetzt wird, solange die Temperatur des Motors niedriger ist als ein Temperaturgrenzwert, niedriger oder gleich wie eine Motorbetriebs-Solltemperatur.

2. Verfahren nach Anspruch 1, **dadurch gekennzeichnet, dass** die Strategie über mehrere Motorzyklen umgesetzt wird.

3. Verfahren nach einem der vorhergehenden Ansprüche, **dadurch gekennzeichnet, dass** die Strategie nur umgesetzt wird, wenn die Motordrehzahl und das Motordrehmoment niedriger als jeweils vorausbestimmte Grenzwerte geschätzt oder gemessen werden.

4. Verfahren nach einem der vorhergehenden Ansprüche, **dadurch gekennzeichnet, dass** die Strategie während eines Getriebegangwechsels umgesetzt wird.

5. Verfahren zur Kontrolle eines Motors, der mit einem Abgasrückführungs-Kreislauf ausgestattet ist, wobei der Kreislauf wenigstens einen Zweig umfasst, der mit einem Tauscher zum Abkühlen des zurückgeführten Abgases und wenigstens einem Bypass zum Kurzschließen des Zweiges, der den Tauscher durchläuft, ausgestattet ist, **dadurch gekennzeichnet, dass** man den Abgasumlauf im Zweig des Tauschers während der Umsetzungsphasen einer Strategie unterbindet, die darauf abzielt, den Temperaturanstieg des Motors zu beschleunigen, und die im Anhalten der Kraftstoffeinspritzung und des Frischlufteinlasses in wenigstens einem Zylinder besteht, wobei gleichzeitig die Füllung von diesem wenigstens einen Zylinder durch Wiedereinspritzung in den Abgaseinlass aufrechterhalten wird.

## Claims

1. Engine-control method, according to which, during cold-start phases, in the case of deceleration, a strategy is applied aimed at accelerating the temperature rise of the engine, and consisting of the stoppage of the fuel injection and the admission of fresh air into at least one cylinder, while maintaining the filling of this at least one cylinder by reinjection of exhaust gas at the inlet, said strategy being implemented as long as the temperature of the engine is below a threshold temperature, less than or equal to a target engine-operating temperature.

2. Method according to claim 1, **characterised in that** the strategy is implemented over several engine cycles.

3. Method according to any one of the preceding claims, **characterised in that** the strategy is implemented only if the engine speed and the engine torque are estimated or measured to be below predetermined respective thresholds.

4. Method according to any one of the preceding claims, **characterised in that** the strategy is implemented during a change in gear ratio.

5. Method for controlling an engine provided with a circuit for recirculation of the exhaust gases, said circuit comprising at least one branch provided with a heat exchanger for cooling the recirculated exhaust gases and at least one bypass for short- circuiting said branch passing through said heat exchanger, **characterised in that** the circulation of the exhaust gases in the branch of the heat exchanger is inhibited during the phases of implementing a strategy aimed at accelerating the temperature rise of the engine, and consisting of the stoppage of the injection of fuel and the admission of fresh air into at least one cylinder, while maintaining the filling of this at least one cylinder by reinjection of exhaust gases at the inlet.
